# EUROPÄISCHE PATENTSCHRIFT

(11) **EP 2 361 945 B1**
(45) Veröffentlichungstag und Bekanntmachung des Hinweises auf die Patenterteilung: **15.02.2017**
(21) Anmeldenummer: 11167144.2
(22) Anmeldetag: 20.07.2007
(51) Int. Cl.: C08G 77/60, C01B 33/027, C09D 183/16, C01B 33/107, H05H 5/04

(54) **POLYSILANVERARBEITUNG UND VERWENDUNG**
POLYSILANE PROCESSING AND USE
TRAITEMENT DE POLYSILANES ET UTILISATION

(30) Priorität: 20.07.2006 DE 102006034061
(43) Veröffentlichungstag der Anmeldung: 31.08.2011
(62) Teilanmeldung aus: 07786235.7
(73) Patentinhaber: Spawnt Private S.à.r.l., 1148 Luxembourg (LU)
(72) Erfinder: Auner, Gudrun, Annette, 61479, Glashütten (DE); Bauch, Christian, 06766, Bitterfeld-Wolfen (DE); Lippold, Gerd, 04179, Leipzig (DE); Deltschew, Rumen, 04319, Leipzig (DE)
(74) Vertreter: Epping - Hermann - Fischer

(56) Entgegenhaltungen:
- EP-A- 0 264 722
- EP-A1- 1 264 798
- WO-A-02/100776
- WO-A-2004/036631
- WO-A-2006/125425
- US-A- 4 070 444
- US-A- 4 683 147
- US-A1- 2004 152 287

## Beschreibung

WO 2006/125425 A1 offenbart in Beispielen 1 und 4 jeweils die Herstellung von halogenierten Polysilanen unter Verwendung von Mikrowellenstrahlung zur Erzeugung eines Plasmas.

Die Erfindung betrifft ein Verfahren zur endproduktbezogenen Herstellung von halogenierten Polysilanen nach Anspruch 1. Bevorzugte Ausführungsformen werden in den abhängigen Ansprüchen dargestellt.

Als Polysilane im Sinne des erfindungsgemäßen Verfahrens werden chemische Verbindungen bezeichnet, die sich durch mindestens eine direkte Bindung Si-Si auszeichnen. Polysilane können lineare Siₙ-Ketten und/oder Siₙ-Ringe enthalten sowie Kettenverzweigungen aufweisen.

Halogenierte Polysilane im Sinne des erfindungsgemäßen Verfahrens sind Polysilane, deren Substituenten weitgehend aus Halogenen X = F, Cl, Br, I sowie aus Wasserstoff bestehen. Halogenierte Polysilane im Sinne des erfindungsgemäßen Verfahrens sind wasserstoffarm mit einem Verhältnis H : X ≤ 1 : 5.

### Darstellung der Polysilane

Das halogenierte Polysilangemisch, das unter anderem zur Herstellung von Silizium dienen kann, wird in einem plasmachemischen Schritt aus SiX₄ und H₂ erzeugt. Dieses Verfahren ist in der Patentanmeldung Prof. Dr. Auner DE "Verfahren zur Herstellung von Silizium aus Halogensilanen" beschrieben WO 2006/125425 A1. Die Plasmareaktion kann zum Beispiel mittels kontinuierlicher Anregung (continuous wave) durchgeführt werden:
Ein H₂/SiX₄-Dampf-Gemisch wird mittels eines elektrischen oder elektromagnetischen Wechselfeldes angeregt und in den plasmaförmigen Zustand überführt. Dabei entstehen je nach Reaktionsbedingungen flüssige, halbfeste oder feste Gemische halogenierter Polysilane.

Unter niedermolekularen Polysilanen werden Polysilane mit 2 bis 6 Siliziumatomen, unter mittelmolekularen Polysilanen Polysilane mit 7 bis 14 Siliziumatomen und unter hochmolekularen Polysilanen solche mit mindestens 15 Siliziumatomen verstanden. Die gewählten Gruppen unterscheiden sich hinsichtlich ihrer Weiterverarbeitungsmöglichkeiten durch Destillation, Hydrierbarkeit oder Derivatisierbarkeit.

Es erweist sich erfindungsgemäß als besonders vorteilhaft, die Reaktionsbedingungen in dem Plasmareaktor gezielt so zu steuern, dass nicht nur irgendein halogeniertes Polysilangemisch erzeugt wird, sondern das für die weitere Verarbeitung vorteilhafteste Polysilangemisch.

Die zur weiteren Verwendung vorgesehenen spezifischen halogenierten Polysilane lassen sich insbesondere über die Molekularmassen sowie weitere geeignete Bestimmungsverfahren eindeutig bestimmen. Es lassen sich niedermolekulare, mittelmolekulare und hochmolekulare halogenierte Polysilane herstellen und charakterisieren, wobei cyclisch aufgebauten Polysilanen ebenfalls Bedeutung hinsichtlich der Polymerisation zu langkettigen Polysilanen zukommt.

Es erweist sich als vorteilhaft, die im Plasmareaktor vorgesehene Plasmaquelle in mehreren Stufen vorzusehen und alle denkbaren Maßnahmen zum zielgerichteten Energieeintrag in ein möglichst kleines Raumvolumen mit einem möglichst homogenen Reaktionsgemisch vorzusehen.

Dieses ermöglicht einen hohen Durchsatz des Reaktionsgemisches bei weitestgehend homogenen Reaktionsbedingungen und damit auch weitgehend homogenen Reaktionsprodukten.

Entscheidend für ein möglichst homogenes Reaktionsprodukt ist es, den Energieeintrag in das zu erzeugende Reaktionsplasma so homogen wie möglich zu gestalten und in dem Plasma möglichst homogene Reaktionsbedingungen zu schaffen. Hier erweist es sich als vorteilhaft, nicht nur eine Plasmaanregung vorzusehen, sondern mehrere Plasmaanregungen, die von dem Reaktionsgemisch hintereinander durchlaufen werden.

Um einen möglichst gleichmäßigen Energieeintrag in das von dem Reaktionsgemisch ausgefüllte Raumvolumen zu erhalten, erweist es sich als vorteilhaft, die Plasmaquelle zu pulsen, um eine gleichmäßigere Anregung des Reaktionsgemisches zu erhalten.

Das gleiche Ziel der homogeneren Anregung kann erreicht werden, in dem das Reaktionsgemisch einem zusätzlichen Elektronenfluss zur Herbeiführung eines stabileren Plasmas beziehungsweise einer besseren Plasmazündung ausgesetzt wird.

Zusätzlich kann das Reaktionsgemisch durch außen an dem Reaktor angebrachte elektromagnetische Spulen gequencht werden, womit das Reaktionsplasma einer Kompression mit anschließender Expansion unterworfen wird. Hier wird erfindungsgemäß auch vorgesehen, dass das Reaktionsgemisch eine auf die Wellenlänge der Anregungsquelle abgestimmte Resonatorkammer durchläuft.

Es erweist sich als vorteilhaft, das Plasma zusätzlich einer sichtbaren oder ultravioletten Lichteinstrahlung auszusetzen, um selektiv Ionen oder Moleküle im Reaktionsgemisch anregen zu können.

Entscheidend für einen kontinuierlichen Betrieb der Anlage ist, dass das Produktgemisch eine flüssige (zähflüssige) Konsistenz aufweist, damit es aus dem Reaktor herausfließen kann, um Verstopfungen zu vermeiden.

Die flüssige Konsistenz der erzeugten halogenierten Polysilangemische wird erreicht, in dem in dem Reaktor mit SiX₄-Überschuss und möglichst wenig H₂-Gehalt gefahren wird und die Temperatur des Reaktors unterhalb der Raumtemperatur gehalten wird.

Es ist daher vorteilhaft, dass die Molkonzentration von Wasserstoff im eingesetzten Gasgemisch kleiner ist als die Molkonzentration des SiX₄.

Die Charakterisierung der dargestellten Polysilane erfolgt am Beispiel einer chlorierten Polysilanmischung wie folgt:
Die maßanalytische Bestimmung des Chlorgehalts (Chlorid nach Mohr) einer in wässriger Lauge aufgelösten Probe liefert die empirische Formel SiCl₂₊ₓ für das Polysilangemisch, wobei x je nach mittlerer Kettenlänge zwischen 0 und 1 variiert, weshalb man auch von einem polymeren Dichlorsilylen sprechen kann, das aus Ringen (x=0) und Ketten (0<x≤1) besteht, wobei die Ketten mit -SiCl₃ Gruppen terminiert sind. Die Summenformel der Ringe lautet: SiₙCl₂ₙ und die der Ketten: SiₙCl₂ₙ₊₂.

EDX-Messungen bestätigen ein Atomverhältnis im Produkt von ca. Si:Cl = 1:2.

²⁹Si-NMR-Messungen zeigen, dass es sich bei dem Produkt je nach Erzeugungsbedingungen um ein komplexes Gemisch verschiedener chlorierter Polysilane handeln kann. Dabei liegen vorwiegend unverzweigte Verbindungen vor, wie das Fehlen von Signalen tertiärer (Cl-Si(SiR₃)₃) und quartärer (Si(SiR₃)₄) Siliziumatome belegt. ¹H-NMR-Messungen zeigen, dass das Produkt nur Spuren von Wasserstoff enthält (Si-H-Bindungen).

Die erhaltenen halogenierten Polysilangemische werden als niedermolekulare, mittelmolekulare und hochmolekulare Polysilane bezeichnet. Das niedermolekulare Polysilangemisch setzt sich vorwiegend aus Hexachlordisilan (Si:Cl = 1:3) und Octachlortrisilan S₃Cl₈ (Si:Cl = 1:2,67) zusammen. Diese beiden Komponenten können durch Destillation voneinander getrennt werden.

### Trennung des Polysilangemisches:

Aus dem Produktgemisch können z. B. durch Destillation einzelne Komponenten bzw. Fraktionen erhalten werden.
1. Hexachlordisilan entweicht zuerst bei einer Temperatur von ca. 144°C/l013 hPa, wobei auch schon bei der Polysilansynthese dampfförmig aus dem Gemisch abgetrennt und kondensiert (z. B. 0°C) werden kann.
2. Die nächste Fraktion bilden die niederen chlorierten Oligosilane, wie z. B. das Octachlortrisilan, das Decachlortrisilan und das Decachlorisotetrasilan.
3. Als Rückstand bleiben die Polysilane, deren Zersetzungstemperaturen unterhalb der Siedepunkte bei Normaldruck liegen.

Andere Trennverfahren wie Vakuumdestillation, Sublimation, Chromatographie, selektive Kristallisation, selektives Lösen und Zentrifugation sind ebenfalls geeignet, die Polysilane unterschiedlicher Molmassen voneinander zu trennen.
Durch Derivatisierung des Produktgemisches oder einzelner Komponenten werden erfindungsgemäß teil- oder permethylierte Verbindungen der allgemeinen Formeln SiₙXₐMe_{b} (a + b = 2n) und SiₙX_{c}Me_{d} (c + d = 2n + 2) erhalten. Die Organopolysilane können dann, z. B. durch geeignete Kupplungsreaktionen (z. B. Wurtz-Kupplungen) in Polymere eingebaut oder auf bestehende Polymere aufgepfropft werden, um die besonderen optischen oder elektronischen Eigenschaften der Polysilanketten zu nutzen. In der anorganischen Synthesechemie sind verschiedene Methoden zur chemischen Umwandlung von unterschiedlich substituierten Polysilanen durch Kettenspaltung oder Ringöffnung sowie den partiellen Ersatz von Substituenten durch beispielsweise Halogene bekannt. Diese Methoden können auf das primäre Polysilangemisch, einzelne Fraktionen nach einer Auftrennung, abgetrennte reine Verbindungen oder Folgeprodukte der teilweisen oder vollständigen Substitution der Halogenatome in den entsprechenden Polysilanen angewendet werden. So lassen sich beispielsweise vollständig organosubstituierte cyclische Silane durch Ringöffnung in Ketten umwandeln, die nur an den Enden Halogensubstituenten tragen oder unter angepassten Bedingungen an vollständig organosubstituierten Cyclosilanen nur ein bzw. zwei Substituenten gegen Halogene austauschen, so dass das Ringsystem erhalten bleibt. Auch eine direkte Nutzung geeignet derivatisierter Polysilane, z. B. in Form dünner Schichten auf geeigneten Substraten, ist denkbar. Eine mögliche Verwendung der Organopolysilane liegt in der Herstellung von LED's.

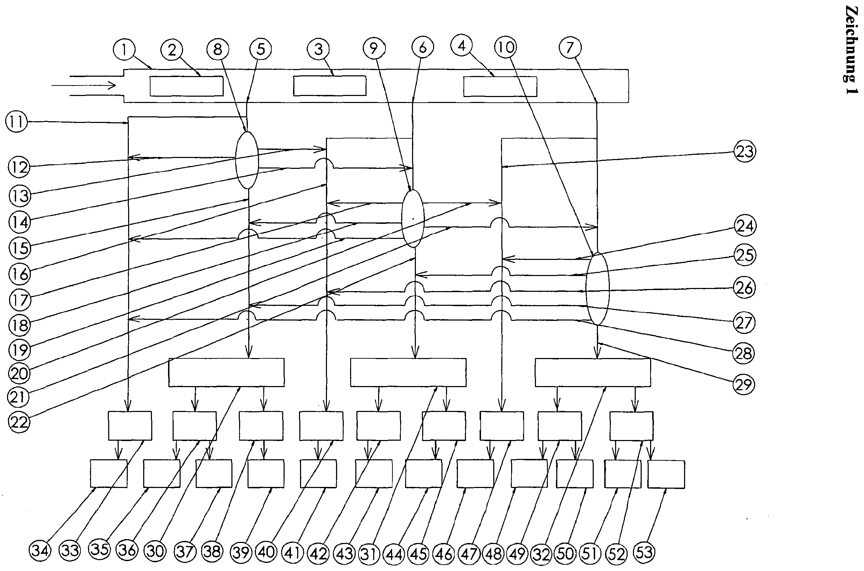

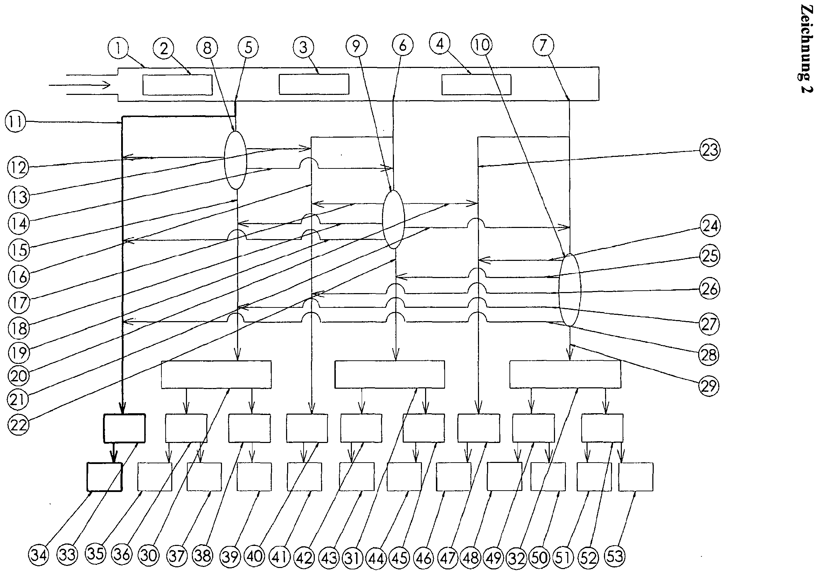

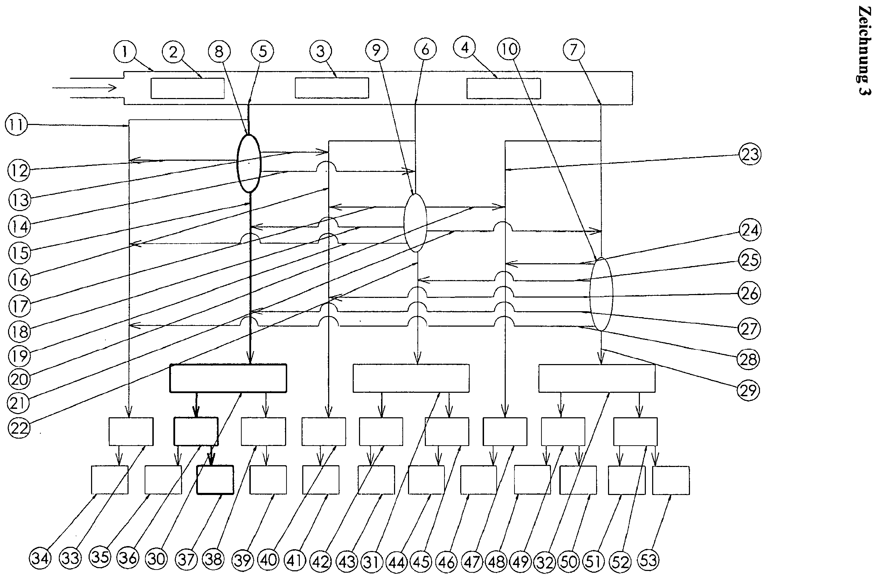

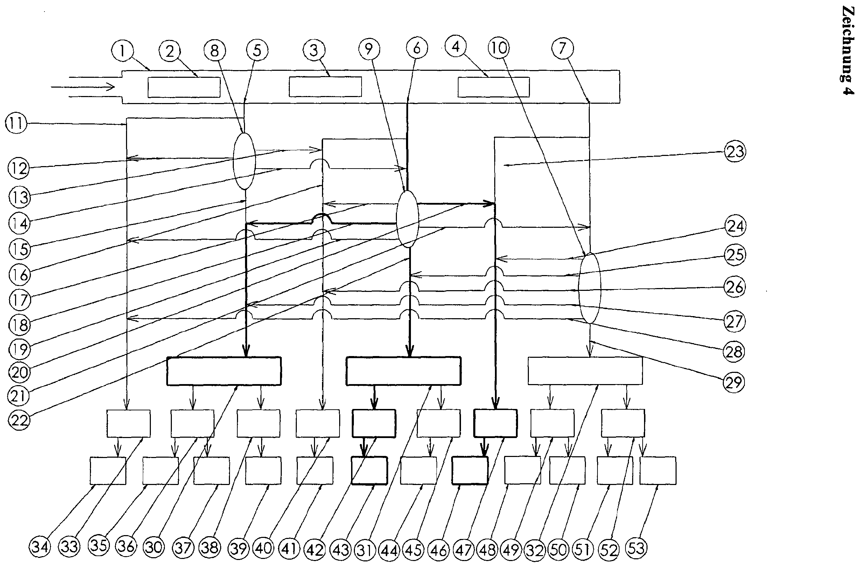

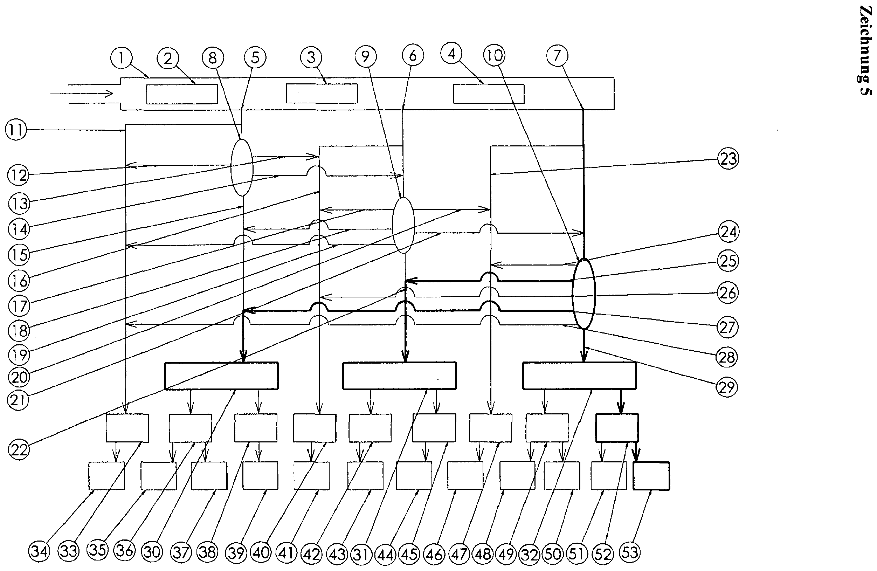

Das erfindungsgemäße Verfahren (Zeichnung 4) sowie Referenzverfahren (Zeichnungen 1 bis 3 und 5) zur Verwendung von Polysilanen ist in 5 Zeichnungen dargestellt.
Zeichnung 1 (Referenz) stellt das gesamte Verfahrensschema zur Verarbeitung dar.
Zeichnung 2 (Referenz) stellt die Nutzung des Verfahrensschemas für die Abscheidung von Bulk-Silicium aus halogenierten Polysilanen kleiner Molmasse wie zum Beispiel Hexachlordisilan dar.
Zeichnung 3 (Referenz) stellt die Nutzung des Verfahrensschemas für die Hydrierung und die Abscheidung von Dünnschichtsilizium aus hydrierten Polysilanen kleiner Molmasse wie zum Beispiel Disilan dar.
Zeichnung 4 stellt die Nutzung des Verfahrensschemas zur partiellen Methylierung halogenierter Polysilane mittlerer Molmasse wie zum Beispiel Decachlortetrasilan und die weitere Verarbeitung dieser Organochlorpolysilane durch die Wurtz-Kupplung dieser Organopolysilane an langkettige Polymere dar bei Rückführung der nieder- und hochmolekularen halogenierten Polysilane aus der Destillation in den Vorratsbehälter für nieder-/hochmolekulare Polysilane und die Abführung des hochmolekularen Destillationsrestes in die unmittelbare Abscheidung von Silicium.
Zeichnung 5 (Referenz) stellt die Nutzung des Verfahrens zur Abtrennung von hochmolekularen halogenierten Polysilanen, deren Methylierung und anschließende Verarbeitung zu Organopolysilanen bei Rückführung der nieder- und mittelmolekularen Destillate in die
   jeweiligen Vorratsbehälter dar.

### Bezugszeichenliste:

1. Plasmareaktor
2. elektromagnetischer Hochfrequenzerzeuger I
3. elektromagnetischer Hochfrequenzerzeuger II
4. elektromagnetischer Hochfrequenzerzeuger III
5. Abführung vorwiegend niedermolekularer halogenierter Polysilane
6. Abführung vorwiegend mittelmolekularer halogenierter Polysilane
7. Abführung vorwiegend hochmolekularer halogenierter Polysilane
8. Destillation vorwiegend niedermolekularer halogenierter Polysilane
9. Destillation vorwiegend mittelmolekularer halogenierter Polysilane
10. Destillation vorwiegend hochmolekularer halogenierter Polysilane
11. Abführung undestillierter niedermolekularer halogenierter Polysilane
12. Abführung Destillationsrückstände
13. Abführung Destillationsrückstände
14. Abführung Destillationsrückstände
15. Abführung niedermolekularer Destillate
16. Abführung undestillierter mittelmolekularer halogenierter Polysilane
17. Abführung Destillationsrückstände
18. Abführung Destillationsrückstände
19. Abführung Destillationsrückstände
20. Abführung Destillationsrückstände
21. Abführung Destillationsrückstände
22. Abführung mittelmolekularer Destillate
23. Abführung undestillierter hochmolekularer halogenierter Polysilane
24. Abführung Destillationsrückstände
25. Abführung Destillationsrückstände
26. Abführung Destillationsrückstände
27. Abführung Destillationsrückstände
28. Abführung Destillationsrückstände
29. Abführung hochmolekularer Destillate
30. Vorratsbehälter niedermolekularer halogenierter Polysilane
31. Vorratsbehälter mittelmolekularer halogenierter Polysilane
32. Vorratsbehälter hochmolekularer halogenierter Polysilane
33. Vorratsbehälter vorwiegend niedermolekularer halogenierter Polysilangemische
34. Abscheidevorrichtung für Silicium aus niedermolekularen Polysilangemischen
35. Abscheidevorrichtung für Siliziumschichten aus gasförmigen niedermolekularen hydrierten Polysilanen
36. Hydrierungsreaktor
37. Speicherbehälter flüssiger niedermolekularer hydrierter Polysilane
38. Methylierungsreaktor
39. Speicherbehälter niedermolekularer Organopolysilane
40. Vorratsbehälter vorwiegend mittelmolekularer halogenierter Polysilangemische
41. Abscheidevorrichtung für Silizium aus mittelmolekularen Polysilangemischen
42. Hydrierungsreaktor
43. Abscheidevorrichtung für Siliziumschichten aus gasförmigen mittelmolekularen hydrierten Polysilanen
44. Speicherbehälter mittelmolekularer Organopolysilane
45. Methylierungsreaktor
46. Abscheidevorrichtung für Silizium aus hochmolekularen Polysilangemischen
47. Vorratsbehälter vorwiegend hochmolekularer halogenierter Polysilangemische
48. Abscheidevorrichtung für Siliziumschichten aus gasförmigen hochmolekularen hydrierten Polysilanen
49. Hydrierungsreaktor
50. Speicherbehälter flüssiger hochmolekularer hydrierter Polysilane
51. Speicherbehälter gasförmiger hochmolekularer Organopolysilane
52. Methylierungsreaktor
53. Speicherbehälter flüssiger hochmolekularer Organopolysilane

## Patentansprüche

1. Verfahren zur endproduktbezogenen Herstellung und Weiterverarbeitung von chlorierten Polysilangemischen zur Erzeugung von Silizium und/oder siliziumbasierten Produkten, **dadurch gekennzeichnet, dass** je nach erzeugtem Polysilangemisch niedermolekularer Polysilane mit 2 bis 6 Siliziumatomen, mittelmolekularer Polysilane mit 7 bis 14 Siliziumatomen oder hochmolekularer Polysilane mit mindestens 15 Siliziumatomen und gewünschtem End- und/oder Zwischenprodukt die chlorierten Polysilangemische plasmachemisch aus SiCl₄ und H₂, hergestellt werden und wobei durch Methylierung des Polysilangemisches oder einzelner Komponenten teil- oder permethylierte Verbindungen der allgemeinen Formeln SiₙClₐMe_{b} (a + b = 2n) und SiₙCl_{c}Me_{d} (c + d = 2n + 2) erhalten werden, wobei das Polysilangemisch ein polymeres Dichlorsilylen mit der empirischen Formel SiCl₂₊ₓ ist, das aus Ringen (x=0) mit der Summenformel SiₙCl₂ₙ und Ketten (0<x≤1) mit der Summenformel SiₙCl₂ₙ₊₂ besteht, wobei die Ketten mit -SiCl₃ Gruppen terminiert sind.

2. Verfahren zur endproduktbezogenen Herstellung und Weiterverarbeitung von plasmachemisch hergestellten chlorierten Polysilangemischen gemäß Anspruch 1 **dadurch gekennzeichnet, dass** je nach Anzahl der Plasmareaktoren oder der Plasmaquellen in einem Plasmareaktor Polysilangemische von vorwiegend niederer, mittlerer und hoher Molmasse erhalten werden, die einer Weiterverarbeitung zugeführt werden.

3. Verfahren zur endproduktbezogenen Herstellung und Weiterverarbeitung von plasmachemisch hergestellten chlorierten Polysilangemischen gemäß Anspruch 1 bis 2 **dadurch gekennzeichnet, dass** sich in dem Plasmareaktor Plasmapulsung und/oder zusätzliche elektrische Entladung und/oder Plasmaquenchen abwechseln.

4. Verfahren zur endproduktbezogenen Herstellung und Weiterverarbeitung von plasmachemisch hergestellten chlorierten Polysilangemischen gemäß Anspruch 1 bis 3 **dadurch gekennzeichnet, dass** das Plasma in dem Plasmareaktor zusätzlich mit Infrarot- oder sichtbarer- oder Ultraviolettstrahlung bestrahlt wird.

5. Verfahren zur endproduktbezogenen Herstellung und Weiterverarbeitung von chlorierten Polysilangemischen gemäß Anspruch 1 bis 4 **dadurch gekennzeichnet, dass** die vorwiegend niedermolekularen Polysilangemische einer Destillation zugeführt werden, um niedermolekulare chlorierte Polysilane in reiner Form zu erhalten.

6. Verfahren zur endproduktbezogenen Herstellung und Weiterverarbeitung von chlorierten Polysilangemischen gemäß Anspruch 5 **dadurch gekennzeichnet, dass** der Destillationsrest mit überwiegend mittleren Molmassen einer unmittelbaren Weiterverarbeitung zugeführt oder in eine andere Destillationskolonne überfuhrt wird.

7. Verfahren zur endproduktbezogenen Herstellung und Weiterverarbeitung von chlorierten Polysilangemischen gemäß Anspruch 5 oder 6 **dadurch gekennzeichnet, dass** die Polysilangemische mit vorwiegend unzersetzt destillierbaren Komponenten mittlerer Molmasse einer Destillation zugeführt werden, um einzelne Komponenten in reiner Form und/oder Fraktion bestimmter Siedebereiche zu erhalten.

8. Verfahren zur endproduktbezogenen Herstellung und Weiterverarbeitung von chlorierten Polysilangemischen gemäß Anspruch 5 bis 7 **dadurch gekennzeichnet, dass** die Destillate oder Destillationsrückstände mit überwiegend niederen oder hohen Molmassen einer unmittelbaren Weiterverarbeitung zugeführt oder in eine andere Destillationskolonne überführt werden.

9. Verfahren zur endproduktbezogenen Herstellung und Weiterverarbeitung von chlorierten Polysilangemischen gemäß Anspruch 1 bis 8 **dadurch gekennzeichnet, dass** die vorwiegend hochmolekularen Polysilangemische der Trennmethode der grössenselektiven Chromatographie unterworfen werden, um Polysilanfraktionen mit hohen mittleren Molmassen zu erhalten.

10. Verfahren zur endproduktbezogenen Herstellung und Weiterverarbeitung von chlorierten Polysilangemischen gemäß Anspruch 5 bis 7 **dadurch gekennzeichnet, dass** die Trennungsfraktion mit überwiegend niederen oder mittleren Molmassen einer unmittelbaren Weiterverarbeitung zugeführt oder in eine anderen Destillationskolonne überführt werden.

11. Verfahren zur endproduktbezogenen Herstellung und Weiterverarbeitung von chlorierten Polysilangemischen gemäß Anspruch 1 bis 10 **dadurch gekennzeichnet, dass** die nach einer Destillation erhaltenen Polysilane mit niederer, mittlerer und hoher Molmasse der Methylierung zugeführt werden.

12. Verfahren zur endproduktbezogenen Herstellung und Weiterverarbeitung von chlorierten Polysilangemischen gemäß Anspruch 1 bis 11 **dadurch gekennzeichnet, dass** als Methylierungsmittel metalloid- und/oder metallorganische Verbindungen verwandt werden.

13. Verfahren zur endproduktbezogenen Herstellung und Weiterverarbeitung von chlorierten Polysilangemischen gemäß Anspruch 1 bis 12 **dadurch gekennzeichnet, dass** die erhaltenen methylierten Organopolysilane in Polymere eingebaut oder auf diese aufgepfropft werden.

14. Verfahren zur endproduktbezogenen Herstellung und Weiterverarbeitung von Polysilangemischen gemäß Anspruch 1 bis 13 **dadurch gekennzeichnet, dass** die methylierten Polysilangemische aus der Gasphase zur Abscheidung von Siliziumcarbid über eine erhitzte Oberfläche geleitet und dort pyrolytisch zersetzt werden.

## Claims

1. A method for the finished-product related production and further processing of mixtures of chlorinated polysilane for the generation of silicon and/or silicon-based products, **characterized in that**, depending on the generated polysilane mixture of low-molecular-weight polysilanes having 2 to 6 silicon atoms, medium-molecular-weight polysilanes having 7 to 14 silicon atoms or high-molecular-weight polysilanes having at least 15 silicon atoms and the desired finished product and/or intermediate product, the chlorinated polysilane mixtures are produced plasma-chemically from SiCl₄ and H₂, and wherein by methylation of the polysilane mixture or of individual components, partially permethylated compounds of the general formulas SiₙClₐMe_{b} (a+b = 2n) and SiₙCl_{c}Me_{d} (c + d = 2n+2) are obtained, wherein the polysilane mixture is a polymeric dichlorosilane having the empirical formula SiCl₂₊ₓ consisting of rings (x=0) having the molecular formula SiₙCl₂ₙ, and chains (0 < x ≤ 1) having the molecular formula SiₙCl₂ₙ₊₂, wherein the chains are terminated with -SiCl₃ groups.

2. A method for the finished-product related production and further processing of plasma-chemically produced mixtures of chlorinated polysilane according to claim 1, **characterized in that** depending on the number of plasma reactors or plasma sources in a plasma reactor, polysilane mixtures having a predominantly low, medium or high molecular mass are obtained, which are fed to further processing.

3. The method for the finished-product related production and further processing of plasma-chemically produced chlorinated polysilane mixtures according to claims 1 or 2, **characterized in that** plasma pulsing and/or additional electrical discharge and/or plasma quenching alternate in the plasma reactor.

4. The method for the finished-product related production and further processing of plasma-chemically produced chlorinated polysilane mixtures according to claims 1 to 3, **characterized in that** the plasma in the plasma reactor is additionally irradiated with infrared radiation or visible radiation or ultraviolet radiation.

5. The method for the finished-product related production and further processing of chlorinated polysilane mixtures according to claims 1 to 4, **characterized in that** the predominantly low-molecular-weight polysilane mixtures are fed to a distillation in order to obtain low-molecular-weight chlorinated polysilanes in pure form.

6. Method for the finished-product related production and further processing of chlorinated polysilane mixtures according to claim 5, **characterized in that** the distillation residue with predominantly medium molar masses is fed to a direct further processing or transferred into another distillation column.

7. Method for the finished-product related production and further processing of chlorinated polysilane mixtures to claims 5 or 6, **characterized in that** the polysilane mixtures with predominantly undecomposed distillable components of medium molar masses are fed to a distillation in order to obtain individual components in pure form and/or fraction of certain boiling ranges.

8. Method for the finished-product related production and further processing of chlorinated polysilane mixtures according to claims 5 to 7, **characterized in that** the distillates or distillation residues with predominantly low or high molar masses are fed to a direct further processing or are led into another distillation column.

9. Method for the finished-product related production and further processing of chlorinated polysilane mixtures according to claims 1 to 8, **characterized in that** the high-molecular polysilane mixtures are exposed to the separation method of size-selective chromatography in order to obtain polysilane fractions having high average molar masses.

10. Method for the finished-product related production and further processing of chlorinated polysilane mixtures according to claims 5 to 7, **characterized in that** the separation fraction with predominantly low or medium molar mass is fed to a direct further processing or into another distillation column.

11. Method for the finished-product related production and further processing of chlorinated polysilane mixtures according to claims 1 to 10, **characterized in that** the polysilanes, obtained after the distillation, with low, medium or high molecular masses are fed to the methylation.

12. Method for the finished-product related production and further processing of chlorinated polysilane mixtures according to claims 1 to 11, **characterized in that** metalloid and/or organometallic compounds are used as methylation agents.

13. Method for the finished-product related production and further processing of chlorinated polysilane mixtures according to claims 1 to 12, **characterized in that** the obtained methylated organopolysilanes are introduced into polymers or are grafted on the same.

14. Method for the finished-product related production and further processing of polysilane mixtures according to claims 1 to 13, **characterized in that** the methylated mixtures of polysilanes are passed over a heated surface directly from the gaseous phase for depositing silicon and are pyrolytically decomposed there.

## Revendications

1. Procédé pour la production liée à un produit fini et pour un traitement supplémentaire de mélanges de polysilanes chlorés en vue de la génération de produits en silicium et/ou à base de silicium, **caractérisé en ce que**, en fonction du mélange de polysilanes généré de polysilanes de faible poids moléculaire présentant de 2 à 6 atomes de silicium, de polysilanes de poids moléculaire moyen présentant de 7 à 14 atomes de silicium et de polysilanes de poids moléculaire élevé présentant au moins 15 atomes de silicium, et du produit fini souhaité et/ou produit intermédiaire, les mélanges de polysilanes chlorés sont générés au cours d'une étape chimique à plasma à partir de SiCl₄ et de H₂, et dans lequel des composants partiellement méthylés ou perméthylés de la forme générale SiₙXₐMe_{b}(a+b=2n) et SiₙX_{c}Me_{d}(c+d=2n+2) sont obtenues par méthylation du mélange polysilanes ou des composants individuels, dans lequel le mélange de polysilanes est un dichlorosilane polymérique ayant la formule empirique de SiCl₂₊ₓ, lequel consiste en des anneaux (x=0) ayant la formule moléculaire SiₙCl₂ₙ et de chaînes (0<x≤1) ayant la formule moléculaire SiₙCl₂ₙ₊₂, dans lequel les chaînes sont terminées par des groupes -SiCl₃.

2. Procédé pour la production liée à un produit fini et pour un traitement supplémentaire de mélanges produits par voie chimique à plasma de polysilanes chlorés selon la revendication 1, **caractérisé en ce que**, selon la nombre des réacteurs à plasma ou des sources à plasma dans un réacteur á plasma, des mélanges de polysilanes présentant de manière prédominante des poids moléculaires faible, moyen ou élevé sont obtenus, qui sont fournies vers un traitement supplémentaire.

3. Procédé pour la production liée à un produit fini et pour un traitement supplémentaire de mélanges produits par voie chimique à plasma de polysilanes chlorés selon l'une quelconque des revendications 1 à 2, **caractérisé en ce que** émission de plasma pulsé et/ou une décharge électrique supplémentaire et/ou une désactivation de plasma sont alternées dans le réacteur à plasma.

4. Procédé pour la production liée à un produit fini et pour un traitement supplémentaire de mélanges produits par voie chimique à plasma de polysilanes chlorés selon l'une quelconque des revendications 1 à 3, **caractérisé en ce que** le plasma dans le réacteur à plasma est en outre irradié avec une radiation infrarouge, une radiation visible ou une radiation ultraviolette.

5. Procédé pour la production liée à un produit fini et pour un traitement supplémentaire de mélanges de polysilanes chlorés selon l'une quelconque des revendications 1 à 4, **caractérisé en ce que** les mélanges de polysilanes présentant de manière prédominante un faible poids moléculaire sont alimentés vers une distillation afin d'obtenir des polysilanes chlorés de faible poids moléculaire sous une forme pure.

6. Procédé pour la production liée à un produit fini et pour un traitement supplémentaire de mélanges de polysilanes chlorés selon la revendication 5, **caractérisé en ce que** le résidu de distillation présentant de manière prédominante des masses molaires moyennes est alimenté vers un traitement supplémentaire direct ou transféré dans une autre colonne de distillation.

7. Procédé pour la production liée à un produit fini et pour un traitement supplémentaire de mélanges de polysilanes chlorés selon l'une quelconque des revendications 5 ou 6, **caractérisé en ce que** les mélanges de polysilanes présentant de manière prédominante des composants de masse molaire moyenne, lesquels peuvent être distillés dans un état non-décomposé, sont alimentés vers une distillation afin d'obtenir des composants individuels sous une forme pure et/ou des fractions de plages d'ébullition définies.

8. Procédé pour la production liée à un produit fini et pour un traitement supplémentaire de mélanges de polysilanes chlorés selon l'une quelconque des revendications 5 à 7, **caractérisé en ce que** les distillats ou résidus de distillation présentant de manière prédominante des masses molaires faibles ou élevées sont alimentés vers un traitement supplémentaire directe ou transférés dans une autre colonne de distillation.

9. Procédé pour la production liée à un produit fini et pour un traitement supplémentaire de mélanges de polysilanes chlorés selon l'une quelconque des revendications 1 à 8, **caractérisé en ce que** les mélanges des polysilanes présentant de manière prédominante une masse moléculaire élevé, sont soumis à la méthode de séparation d'une chromatographie d'exclusion à taille afin d'obtenir des fractions de polysilanes ayant des masses moléculaires moyens élevés.

10. Procédé pour la production liée à un produit fini et pour un traitement supplémentaire de mélanges de polysilanes chlorés selon l'une quelconque des revendications 5 à 7, **caractérisé en ce que** la fraction de séparation présentant de manière prédominante des masses molaires faible ou moyenne sont alimentées directement vers un traitement supplémentaire ou transférée dans une autre colonne de distillation.

11. Procédé pour la production liée à un produit fini et pour un traitement supplémentaire de mélanges de polysilanes chlorés selon l'une quelconque des revendications 1 à 10, **caractérisé en ce que** des polysilanes présentant une masse molaire faible, moyenne, et élevée obtenus après la distillation sont alimentés vers la méthylation.

12. Procédé pour la production liée à un produit fini et pour un traitement supplémentaire de mélanges de polysilanes chlorés selon la revendication 1 à 11, **caractérisé en ce que** des composés organométalloïdes et/ou organométalliques sont utilisés comme agents de méthylation.

13. Procédé pour la production liée à un produit fini et pour un traitement supplémentaire de mélanges de polysilanes chlorés selon l'une quelconque des revendications 1 à 12, **caractérisé en ce que** les organopolysilanes obtenus sont incorporés dans des polymères ou greffés sur ceux-ci.

14. Procédé pour la production liée à un produit fini et pour un traitement supplémentaire de mélanges de polysilanes selon les revendications 1 à 13, **caractérisé en ce que** des mélanges de polysilanes méthylés sont passés sur une surface chauffée à partir de la phase gazeuse pour le dépôt de carbure de silicium et y sont décomposés de manière pyrolytique.
